# EUROPÄISCHE PATENTSCHRIFT

(11) **EP 0 555 826 B1**
(45) Veröffentlichungstag und Bekanntmachung des Hinweises auf die Patenterteilung: **22.04.1998**
(21) Anmeldenummer: 93102055.6
(22) Anmeldetag: 10.02.1993
(51) Int. Cl.: C04B 18/24, C04B 18/04, C04B 20/00, B09B 3/00, C04B 38/00, C04B 7/44, C04B 26/26, C08L 95/00, C10C 3/00

(54) **Verfahren zur Verwertung von Trebern, gebrauchten kieselgurhaltigen Filterhilfsstoffen und Papiererzeugnissen**
Process for utilisation of draff, used kieselguhr containing filter aids and paper products
Procédé d'utilisation de drêche, d'adjurants de filtrage usés contenant de kieselguhr et de produits de papier

(30) Priorität: 13.02.1992 DE 4204230; 03.04.1992 DE 4211122
(43) Veröffentlichungstag der Anmeldung: 18.08.1993
(73) Patentinhaber: Russ, Winfried, Dipl.-Ing., D-85405 Nandlstadt (DE); Meyer-Pittroff, Roland, Prof. Dr.-Ing., D-85354 Freising (DE)
(72) Erfinder: Russ, Winfried, Dipl.-Ing., D-85405 Nandlstadt (DE); Meyer-Pittroff, Roland, Prof. Dr.-Ing., D-85354 Freising (DE)
(74) Vertreter: Castell, Klaus, Dr.-Ing.

(56) Entgegenhaltungen:
- EP-A- 0 430 232
- WO-A-91/13541
- AT-B- 119 045
- AU-D- 5 756 680
- DD-A- 227 954
- DE-A- 2 624 971
- DE-A- 2 909 920
- DE-A- 3 138 969
- DE-A- 3 623 713
- DE-C- 266 277
- DE-C- 589 804
- GB-A- 2 087 406

## Beschreibung

Die Erfindung betrifft ein Verfahren zur Verwertung von Trebern, gebrauchten kieselgurhaltigen Filterhilfsstoffen und gebrauchten, naßfesten, zerkleinerten Papieren mit einem hohen Anteil an Füllern, insbesondere gebrauchter Etiketten.

Treber entstehen beim Bierbrauprozeß als Reststoff dar Würzeherstellung. Geschrotetes Malz, d.h. gekeimtes und gedarrtes Getreide, wird im Sudhaus in einem genau definierten Prozeß mit Wasser ausgelaugt. Die extraktliefernden Stoffe; hauptsächlich Stärke und Eiweiß, werden dabei in wasserlösliche Stoffe umgewandelt. Das ausgelaugte Malz bildet einen wasserunlöslichen Reststoff, der Treber genannt wird.

Gebrauchte kieselgurhaltige Filterhilfsstoffe fallen als Reststoff bei der Anschwemmfiltration an. Manche Fluide können nicht mit Filtermembranen filtriert werden, da der abzufiltrierende Stoff sehr rasch die Membran belagt und verstopft, sodaß keine ausreichende Filtrationsleistung erzielt werden kann. Solche Fluide lassen sich mit sogenannten Anschwemmfiltern filtriaren. Dabei wird ein Filtarhilfsstoff auf eine Trägerschicht angeschwemmt. Der so entstehende Filterkuchen dient zur Filtration des Fluids. Um ein Verblocken der Oberfläche der Filterschicht mit Retentat zu verhindern, wird ständig mit dem zu filtrierenden Fluid Filterhilfsstoff auf den Filterkuchen angeschwemmt. Dies hat zur Folge, daß sich die Oberfläche des Filterkuchens ständig neu ausbildet und nicht durch eine geschlossene Schicht Retentat verblockt wird. Am Ende dar Filtration werden die Filterhilfsstoffe von der Trägerschicht entfernt und fallen als Abfall an. Dieser Abfall hat eine Konsistenz von flüssig bis pastös und wird Kieselgurschlamm genannt. Haupteinsatzbereiche der Anschwemmfiltration mit kieselgurhaltigen Filterhilfsstoffen sind die Getränkeindustrie, die Chemischreinigung und die chemische Industrie. Gebrauchte kieselgurhaltige Filterhilfsstoffe bestehen hauptsächlich aus Kieselgur, Daneben kommen Wasser, Lösungsmittel und in einigen Industriezwegen, wie beispielsweise der Brauerei, auch organische Stoffe in diesem Reststoff vor.

Bekannt ist es, Treber in der Landwirtschaft an Vieh - vor allem an Kühe - zu verfütttern. Das Ungleichgewicht zwischen hohen Mengen anfallender Treber und einem rückläufigen Bedarf an Trebern in der Landwirtschaft hat zur Folge, daß vor allem in der Zukunft ein immer geringer werdender Anteil der Traber von der Landwirtschaft abgenommen werden kann. Außerdem ist die Verfütterung und der Transport dar Traber durch den hohen Wassergahalt und deren leichte Verderblichlkeit erschwert.

Die Trocknung von Trebern ist sehr energieaufwendig und konnte sich deshalb nicht durchsetzen. Gegen billige Futtermittel aus dem Ausland ist der Brauereitreber meist nicht mehr konkurrenzfähig.

Wenn eine Verwertung der Treber in der Landwirtschaft aus diesen Gründen ausscheidet, gelangen die Treber zur Entsorgung auf Deponien oder in Müllverbrannungsanlagen. Teilweise wird der Treber schon kompostiert, was aber mit hohen Kosten verbunden ist.

Gebrauchte kieselgurhaltige Filterhilfsstoffe werden meistens beim Reinigen der Filter mit Wasser verdünnt und mit dem Betriebsabwasser einer Kläranlage zugeführt. Modernere Filter ermöglichen einen Austrag der Filterhilfsstoffe als stichfeste Masse, die dann auch auf Mülldeponien entsorgt werden kann.

Eine Wiederaufbereitung von kieselgurhaltigen Filterhilfsstoffen wird nur vereinzelt durchgeführt, da Transport- und Aufbereitungskosten meist zu hoch sind.

Abfälle aus Papier, Pappe und Karton fallen vor allem in Form von Druckerzeugnissen oder Verpackungsmaterial an. Oftmals können diese Papiererzeugnisse zu Papier, Pappe oder Karton recycelt werden. Teilweise läßt sich aber aufgrund von Verschmutzungen, Sortenunreinheit und anderen Gründen ein Recycling nicht durchführen. Diese Papiere, Pappen und Kartone müssen als Müll entsorgt werden.

Sowohl Trebar als auch gebrauchte kieselgurhaltige Filterhilfsstoffe und Papiererzeugnisse werden daher in Zukunft mehr und mehr auf Deponien oder in Müllverbrennungsanlagen entsorgt werden. Diese Art der Entsorgung ist sowohl volkswirtschaftlich als auch marktwirtschaftlich nicht erstrebenswert und sollte vermieden werden.

Beispielsweise in den Schriften AT 11 90 45, DE-OS 26 24 971 und DD 227 954 wird die Verwendung von Kieselgur oder Bleicherde zur Herstellung von Baustoffen beschrieben.

Viele Verfahren wie die WO 91/13 541, DE 26 23 713, DE 31 38 969 A1, DE-OS 29 09 920, EP 430 232, GB 2 087 406 A und AU-B 575 66/80 beschreiben die Verwendung von Papier zur Herstellung unterschiedlichster Baustoffe. Bei diesen Verfahren werden übliche Papiere verwendet.

Der Erfindung liegt daher die Aufgabe zugrunde, ein Verfahren zu finden, das besonders für Treber, gebrauchte kieselgurhaltige Filterhilfsstoffe und gebrauchte, naßfeste zerkleinerte Papiere mit einem hohen Anteil an Füllern geeignet ist und eine kostengünstige Entsorgung ermöglicht.

Gelöst wird die Aufgabe mit den Merkmalen des Verfahrens nach Patentanspruch 1.

Der bei der Aufbereitung dar tonigen Rohstoffe beigemischte kieselgurhaltige Filterhilfsstoff bewirkt aufgrund der niedrigen Trockendichte des Kieselguranteils eine Erniedrigung der Dichte der gebrannten Ziegel Das mit den Filterhilfsstoffen eingebrachte Wasser trägt zur Einstellung des Wassergehaltes der Rohmasse bei und, wann die Filterhilfsstoffe einen organischen Anteil haben, führt dieser noch zusätzlich zu einer Dichteerniedrigung, da das organische Material beim Brennen der Ziegel ausgebrannt wird und so noch eine zusätzliche Porosierung bewirkt. Bei hohen Brenntemperaturen sintert das in der Kieselgur enthaltene Siliziumdioxid. Dies verbessert die Porosierung und führt damit zu besseren Wärmedämmeigenschaften und einer höheren Druckfestigkeit des fertiggebrannten, Ziegels Die Zugabe gebrauchter kieselgurhaltiger Filterhilfsstoffe zu Ziegeln kann eine Zugabe reiner Kieselgur, die aus wirtschaftlichen Gründen meist nicht in Frage kommt, leicht ersetzen.

So kann beispielsweise mit Hilfe von Kieselgurschlamm die Dichte von Ziegeln erniedrigt werden, ohne große Festigkeitsverluste in Kauf nahmen zu müssen. Auch lassen sich "fette" Tonarten gut mit Kieselgurschlamm abmagern. Bedingt durch die große innere Oberfläche des Kieselgurschlamms sinkt die Neigung zu Salzausblühungen der Ziegeln stark. Zum Herstellen von Ziegeln werden etwa 1 - 50 Vol.-% Kieselgur benötigt.

Bei der Kalksandsteinherstellung lassen sich 1 - 20 Gew-% der Gesamtmasse durch Kieselgurschlamm substituieren. Der Kieselgurschlamm dient als Ersatz für den relativ teueren Kalk. Ca. 5 % Kieselgurschlamm ersetzen 1 % Kalk.

Auch die Zugabe von Trebern verbessert bei der Herstellung von Ziegeln die Baustoffeigenschaften. Vor allem nasse Treber werden zur Porosierung und Dichteerniedrigung genutzt und verbessern durch eine Abmagerung zu fetter Tone die Verarbeitungseiganschaften der tonigen Rohmasse.

Die Größe dar beim Bierbrauprozeß anfallenden Treberanteile liegt zwischen 0,3 und 2 mm und ist daher klein genug, um den Verarbeitungsprozeß der Ziegel nicht zu stören. Die Treber kann vor der Verarbeitung auch noch zerkleinert oder aufgefasert werden, um Scherbeneiganschaften wie Porengröße, Wärmedämmung und Festigkeit zu beeinflussen. Die Treber werden bei der Aufbereitung der tonigen Rohstoffe als Porosierungsmittel beigemischt. Das mit den Trebern eingebrachte Wasser trägt zur Einstellung des Wassergahaltes der Rohmasse bei und verhindert gleichzeitig einen lokalen Wasserentzug aus dar Tonmasse, wie dies bei trockenen Porosierungsmitteln, wie etwa Sägemehl, der Fall ist. Während des Brennvorganges entweicht das Wasser aus den Trebern, die trockenen Treber verbrennen, und es entstehen dadurch Poren in den Scherben.

Benötigt werden etwa 1 - 30 Vol.-% Treber. Es kann normale Treber aus Läuterbottichschrot verarbeitet werden. Gut geeignet sind aber auch die sonst schlecht verwertbaren feinen Treber aus Maischefiltern. Zur Verhinderung von Ausblühungen können die Treber mit Bariumcarbonant oder Bariumhydroxid vorbehandelt werden. Nicht nur Treber, sondern auch zellulosehaltige Rückstände, z.B. aus Biogasanlagen zur Treberverwertung, können als Porosierungshilfsstoff verwendet werden.

Da bei den meisten Prozessen der Baustoffherstellung auch Kieselgurschlamm und Treber mitgetrocknet werden müssen, ist es sinnvoll die Raststoffe vorher zu entwässern. Hierzu ist neben der bekannten mechanischen Entwässerung auch das Verwenden von Tensiden. Flockungsmitteln und Wasserverdrängern geeignet. Deren Einsatzkonzentrationen liegen zwischen 0,01 - 10 Vol- %. Der Wassergehalt läßt sieh damit um 10 - 25 % bezogen auf Gesamtwasser, erniedrigen.

Kieselgurschlamm und Treber zersetzen sieh rasch. Um Abwasser und Gerüche zu vermeiden, sollten sie für mindestens 4 - 6 Wochen konserviert werden. Die Konservierung kann durch Reduktion des Wassergehalts und/oder den Einsatz von chemischen und physikalischen Verfahren geschehen. Tenside und Wasserverdränger zeigen dabei gute Wirkung. Zur Konservierung können auch Desinfektionsmittel, Säuren und Laugen dienen. Eine physikalische Behandlung ist mit Wärme, Druck, Ultraschall, Strom und Mikrowellen möglich.

Besonders geeignet sind naßfeste, gastrichene und hochglänzende Papiere, die einen hohen Anteil an Füllern haben. Der Füller besteht meist aus Tonmineralien (Kaolin). Die sehr hochwertigen Tonmineralien haben einen positiven Einfluß auf die Qualität der Ziegel.

Für das erfindungsgemäße Verfahren können auch Papiererzeugnisse verwertet werden, die nicht oder nur sehr schlecht für ein direktes Recycling geeignet sind, wie z.B. Etiketten aus Flaschenwaschmaschinen. Der bei der Zerkleinerung von getrockneten Altetiketten entsehende Staub enthält viel Natronlauge, die wiedergewonnen werden kann.

Ein Beispiel für die Verwertung dieser Papiererzeugnisse ist die Ziegelherstellung. Die Papier-, Pappe- und Kartonagenstücke stören den Verarbeitungsprozeß nicht. Sie werden bei der Aufbereitung der tonigen Rohstoffe als Porosierungsmittel beigemischt. Während des Brennvorgangs verbrennen die Papier-, Pappe- und Kartonagenstücke, und es entstehen dadurch Poren in den Scherben.

Die Papiererzeugnisse dienen zur Porosierung und damit zur Dichteerniedrigung der Ziegel und verbessern durch eine Abmagerung zu fetter Tone die Verarbeitungseigenschaften der tonigen Rohmasse.

Die Größe der in den Baustoffen entstehenden Poren ist durch die Größe dar Papiererzeugnisse direkt beeinflußbar, indem die Größe der Papier-, Pappe- und Kartonagenstücke durch entsprechende vorgeschaltete verfahrenstechnische Maßnahmen eingestellt wird. Dabei ist es moglich, beispielsweise einen Zerreißprozeß, einen Pelletisierungsprozeß oder einen anderen Prozeß zur Erzeugung von Partikeln vorzuschalten.

Die Zerkleinerung der Papiererzeugnisse erfolgt vorzugsweise mittels einer Schneidmühle. Die so zerkleinerten Papiere, Pappen und Kartonagen müssen kleiner 6 mm sein. Der entsehende Feinststaub kann abgesaugt und gegebenenfalls anders verwertet werden. Sind die zu verarbeitenden Papiere, Pappen und Kartonagen naß, so können sie zu Großpellets mit einem Durchmesser von mehr als 6 mm verarbeitet werden. Diese Pellets lassen sich gut in Gitterplaletten ohne zusätzlichen Energieaufwand trocknen.

Bei der trockenen Zerkleinerung der Papiererzeugnisse stellt der entstehende Staub und das fein zerkleinerte Papier eine große Gefahrenquelle dar. Es kann zu Staubexplosionen und Bränden kommen. Zur Vermeidung dieses Gefahrenpotentials kann auch eine Naßzerkleinerung vorgenommen werden. Zur Vermeidung großer Abwassermengen kann das Mahlwasser im Kreislauf gefahren werden. Die Entwässerung und Konservierung des Schnittguts kann wie schon für Kieselgurschlamm und Treber beschrieben vorgenommen werden. Zusätzlich können auch Mittel zum Verhindern der Verklumpung und Verfestigung des Schnittgutes zugegeben werden.

Treber und Papiererzeugnisse können übliche Porosierungsmittel wie Sägemehl oder Styropor gut ersetzen. Dadurch wird einerseits eine vorteilhafte Verwertung der Treber und Papiererzeugnisse erreicht und andererseits werden durch die bisher verwendeten Porosierungsmittel entstehende Umweltbelastungen vermieden. Wenn als Porosierungsmittel Sägemehl, das von behandelten Hölzern stammt, verwendet wird, entstehen bei der Verbrennung Formaldehydemissionen, und beim Verbrennen von Styropor entstehen u.a. Benzole.

Auch bei der Herstellung von Asphaltbeton kann 0,1 - 5 Gew.-% Kieselgur (Trockensubstanz) verwendet werden. Dabei werden folgende Eigenschaften verbessert: Quellung, Wasseraufnahme, Abrieb, Druckfestigkeit, Wärmestandfestigkeit, Kälteverhalten und Verschleißbeständigkeit. Mit zunehmender Kieselgurmenge wird der Asphalt heller, was besonders im Tunnelbau interssant ist.

## Patentansprüche

1. Verfahren zur Verwertung von Trebern, gebrauchten kieselgurhaltigen Filterhilfsstoffen und gebrauchten, naßfesten, zerkleinerten Papieren mit einem hohen Anteil an Füllern, insbesondere gebrauchter Etiketten, ***dadurch gekennzeichnet, daß*** Asphaltbeton, Ziegel oder Kalksandstein bei deren Herstellung Treber und/oder gebrauchte kieselgurhaltige Filterhilfsstoffe aus Anschwemmfiltration und/oder gebrauchte naßfeste, gestrichene und hochglänzende zerkleinerte Papiere mit einem hohen Anteil an Füllern, oder gebrauchte Etiketten zugegeben werden.

## Claims

1. Method of exploiting brewers' or distillers' grains, spent silica-containing filtering aids and spent, water-resistant disintegrated papers having a high content of fillers, especially used labels, characterized in that brewers' or distillers' grains and/or spent silica-containing filtering aids from alluvial filtration and/or spent, water-resistant, coated and high-gloss disintegrated papers having a high content of fillers, or used labels, are added to asphalt concrete, brick or sand-lime brick during their production.

## Revendications

1. Procédé d'utilisation de drêche, d'adjuvants de filtrage usés contenant du kieselguhr et de papier usagé résistant à l'état humide, déchiqueté et contenant une forte proportion de charges, notamment d'étiquettes usagées, *caractérisé en ce* qu'on ajoute de la drêche et/ou des adjuvants de filtrage usés contenant du kieselguhr et provenant d'un filtrage par couches et/ou du papier couché et glacé usagé déchiqueté, résistant à l'état humide et contenant une forte proportion de charges, ou des étiquettes usagées à du béton asphaltique, des briques cuites ou des briques silico-calcaires, et ce au moment de leur fabrication.
